# EUROPÄISCHE PATENTANMELDUNG

(11) **EP 4 671 692 A1**
(43) Veröffentlichungstag der Anmeldung: **31.12.2025**
(21) Anmeldenummer: 25181032.1
(22) Anmeldetag: 05.06.2025
(51) Int. Cl.: G01C 25/00, G01P 21/00

(54) **ROTATIONSTISCH MIT VERKIPPBARER SENSORAUFNAHME**

(30) Priorität: 27.06.2024 DE 102024118279
(71) Anmelder: Deutsches Zentrum für Luft- und Raumfahrt e.V., 53227 Bonn (DE)
(72) Erfinder: BORGES FARCONI, Leonardo, 28359 Bremen (DE)
(74) Vertreter: Rösler Rasch van der Heide & Partner

(57) **Zusammenfassung**

Die Erfindung betrifft eine Vorrichtung zur Durchführung von Tests für die Charakterisierung eines inertialen Sensors (1), aufweisend: Ein stationäres Basiselement (3) und einen daran rotierbar gelagerten Rotationstisch (5), der eine Aufnahme (7) für den inertialen Sensor (1) und für eine Referenzsensoreinheit (9) aufweist; einen Motor (11) zum Rotieren des Rotationstischs (5); einen Referenzdrehmesser (13) zum Bestimmen einer aktuellen Drehposition des Rotationstischs (5); eine Vibrationserzeugereinheit (15) zum Erzeugen von Referenzbeschleunigungen am Rotationstisch (5); und eine Vibrationserfassungseinheit (17) zum Erfassen von am Rotationstisch (5) tatsächlich vorliegenden Referenzbeschleunigungen. Die Aufnahme (7) ist gegenüber dem Rotationstisch (5) verkippbar.

## Beschreibung

Die Erfindung betrifft eine Vorrichtung zur Durchführung von Tests für die Charakterisierung und/oder Kalibrierung eines inertialen Sensors, sowie ein Verfahren zur Durchführung von Tests für die Charakterisierung und/oder Kalibrierung eines inertialen Sensors.

Inertiale Messeinheiten (sogenannte IMUs, engl. für "inertial measurement units") dienen dazu, aktuelle kinematische Größen in einem Referenzkoordinatensystem zu erfassen.

Größtenteils mechanisch ausgeführt nutzen sie bekannte Effekte, wie den Zusammenhang zwischen Kraft und beschleunigter Masse, die Lagewinkelstabilität von rotierenden Massen (Kreiselstabilität) und Ähnliches, um weiterverarbeitbare Sensorsignale von vorherrschenden kinematischen Größen zu ermitteln.

Die folgenden Informationen ergeben sich aus fachmännischen Überlegungen, anstatt sich notwendigerweise aus einem bestimmten Dokument des Stands der Technik zu ergeben: Wie für andere Sensoren auch ist es Zweck von inertialen Messeinheiten, eine natürlich auftretende Größe zu erfassen und einen verarbeitbaren Signalwert daraus zu generieren. Naturgemäß weist jeder physische Sensor gewisse Ungenauigkeiten auf, die von Umgebungsbedingungen beeinflusst werden können und insbesondere über verschiedene Bereiche von Messgrößen und/oder Frequenzen der gemessenen Größe variieren. Ein Sensor weist damit eine gewisse Übertragungsfunktion (im algebraischen wie im dynamischen Sinne) auf, welche eine Abbildung der natürlich auftretenden Größe auf das verarbeitbare Sensorsignal darstellt.

Eine solche Übertragungsfunktion kann mit mathematischen Modellen beschrieben werden. Eine Vielzahl von Modelltypen kommt hierfür prinzipiell in Frage, seien es Modelle in Form von algebraischen Gleichungen oder dynamische Modelle, wobei letztere eine frequenzabhängige Übertragungsfunktion beschreiben und damit bevorzugt als Differentialgleichungen oder als Gleichungen im Frequenzbereich (wie dem Laplace Bereich) formuliert werden. Es sind ferner lineare Modelle von nichtlinearen Modellen zu unterscheiden. Statistische Modelle erlauben es, viele einzelne empirische Daten in ein Modell zusammenzufassen. Je genauer ein Modell die Realität des Sensors abbildet, umso besser ist der vom jeweiligen Sensor eingebrachte Fehler in der Übertragung von der natürlich auftretenden Größe auf das verarbeitbare Sensorsignal korrigierbar.

Ein häufig essenzieller Bestandteil einer inertialen Messeinheit sind Kreiselinstrumente. Solche Kreiselinstrumente dienen dazu, die Orientierung eines Referenzkoordinatensystems in Form von Lagewinkeln insbesondere gegenüber der Erde ermitteln zu können. Der dabei ausgenutzte Effekt ist die Stabilität einer rotierenden Masse gegenüber Lagewinkeländerungen. Wird beispielsweise eine kardanisch aufgehängte schnell rotierende Masse in einem Gehäuse an einen bewegten Körper angeordnet, wird bei einer Rotationsbewegung des Körpers und damit des Gehäuses das Gehäuse sozusagen um die rotierende Masse herum rotiert, während die jeweilige Achse der rotierenden Masse ihre Ausrichtung beibehält. Aus dieser relativen Orientierungsänderung zwischen rotierender Masse und Gehäuse kann somit eine Orientierungsänderung in Form von differenziellen Winkeln ermittelt werden. Wird durch zeitliche Integration einer gemessenen Drehrate ein Lagewinkel ermittelt, so integrieren sich naturgemäß Messfehler in der gemessenen Drehrate zu größeren Fehlern in den Lagewinkeln auf. Zur Vermeidung dieser Fehlerintegration werden typischerweise Kreiselinstrumente nicht alleine verwendet, sondern mit anderen Sensorarten gekoppelt. Dennoch geht der Messfehler in der gemessenen Drehrate in den abschließend ermittelten Lagewinkel ein.

Mit dem Ziel, Sensorfehler von Kreiselinstrumenten wie Drehratensensoren zu reduzieren, wurden und werden typischerweise solche Kreiselinstrumente zur Charakterisierung im Sinne einer Systemidentifikation getestet, um mittels der Charakterisierung und dem damit erreichten Wissen über Übertragungsfehler der Kreiselinstrumente Fehler im späteren Betrieb zu eliminieren, d. h. um die Kreiselinstrumente zu kalibrieren.

Um einen inertialen Sensor, beispielsweise einen Drehratensensor, zu charakterisieren, unter Umständen mit dem Ziel der Kalibrierung, kann ein Rotationstisch verwendet werden, mithilfe dessen der inertiale Sensor einer Drehbewegung ausgesetzt werden kann.

Aufgabe der Erfindung ist es, einen Rotationstisch bereitzustellen, mithilfe dessen effiziente Tests zur Datengewinnung für die Charakterisierung und/oder Kalibrierung eines inertialen Sensors durchgeführt werden können.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft eine Vorrichtung zur Durchführung von Tests für die Charakterisierung und/oder Kalibrierung eines inertialen Sensors, aufweisend:
- ein stationäres Basiselement und einen am Basiselement rotierbar gelagerten Rotationstisch, wobei der Rotationstisch eine Aufnahme für den inertialen Sensor und für eine Referenzsensoreinheit aufweist;
- einen mit dem Rotationstisch verbundenen Motor zum Rotieren des Rotationstischs gegenüber dem Basiselement um eine Rotationsachse;
- einen Referenzdrehmesser zum Bestimmen einer aktuellen Drehposition und einer aktuellen Drehrate des Rotationstischs gegenüber dem Basiselement;
- eine Vibrationserzeugereinheit zum Erzeugen von Referenzbeschleunigungen am Rotationstisch;
- eine Vibrationserfassungseinheit zum Erfassen von am Rotationstisch tatsächlich vorliegenden Referenzbeschleunigungen und Referenzverschiebungen des Rotationstischs;
- eine Steuereinheit, die dazu eingerichtet und ausgeführt ist, die Vibrationserzeugereinheit zum Erzeugen von Referenzbeschleunigungen und gleichzeitig den Motor zum Rotieren des Rotationstischs gegenüber dem Basiselement anzusteuern; wobei die Aufnahme gegenüber dem Rotationstisch verkippbar ist, sodass eine Orientierung des inertialen Sensors zusammen mit einer Orientierung der Referenzsensoreinheit gegenüber der Rotationsachse des Rotationstischs veränderbar ist, ohne dass ein Herausnehmen des inertialen Sensors aus der Aufnahme zu seiner Orientierungsänderung nötig ist.

Die Steuereinheit ist dazu eingerichtet, den Vibrationserzeuger zum Erzeugen von Referenzbeschleunigungen und gleichzeitg den Motor zum Rotieren des Rotationstischs gegenüber den Basiselement anzusteuern. Somit werden simultan auf den zu untersuchenden inertialen Sensor sowohl Rotationen als auch Vibrationen aufgebracht. Der Rotationstisch bildet damit eine Zentrifuge aus, die auf entsprechende Belastungen von Vibrationen an ihr ausgelegt ist. Der Referenzdrehmesser und die Vibrationserfassungseinheit erlauben die Aufzeichnung einer Zeitreihe der Rotationen unter zeitlicher Zuordnung zu den Vibrationen.

Ein Schleifring zwischen dem Rotationstisch und dem Basiselement kann vorgesehen werden, um den inertialen Sensor mit Energie zu versorgen, während sich dieser durch die Rotation des Rotationstisches gegenüber dem Basiselement in einer Rotationsbewegung befindet. Alternativ oder ergänzend kann der Schleifring verwendet werden, einen Datenstrom aus Sensorsignalen des inertialen Sensors und idealerweise auch der Referenzsensoreinheit vom rotierenden Rotationstisch zu leiten.

Bei der Verbindung zwischen dem Rotationstisch und dem Basiselement sollte darauf geachtet werden, dass beide möglichst steif miteinander verbunden werden mit Ausnahme des Freiheitsgrades zur Rotation des Rotationstischs. Besonders bevorzugt werden möglichst steife Rollenlager wie Kugellager zwischen dem Rotationstisch und dem Basiselement vorgesehen, um eine translatorische Verschiebung der beiden gegeneinander zu vermeiden, insbesondere dann, wenn die Vibrationserzeugereinheit so angeordnet ist, dass sie das Basiselement zusammen mit dem Rotationstisch in Schwingungen versetzt. Auch eine möglichst steife Verbindung zur Vibrationserzeugereinheit ist in diesem Fall vorteilhaft vorzusehen. Die Vorrichtung sollte außerdem so entworfen werden, dass möglichst die Eigenfrequenzen so hoch wie möglich sind, das heißt idealerweise deutlich über den Anregungsfrequenzen, um den Einfluss der Vorrichtung auf den zu prüfenden Sensor zu verringern.

Bevorzugt weist die Vibrationserfassungseinheit einen oder mehrere Beschleunigungssensoren auf, um die Vibration des Vibrationstisches aktuell zu erfassen. Die Vibrationserfassungseinheit kann auch in dem Basiselement angeordnet werden, wenn vorgesehen wird, dass der Rotationstisch zusammen mit dem Basiselement gemeinsam die Vibrationen ausführt, die von der Vibrationserzeugereinheit erzeugt werden. Die Vibrationen können auch durch Auslenkungssensoren der Vibrationserfassungseinheit ermittelt werden, sodass anstelle der Beschleunigungen des Rotationstisches (bzw. des Basiselements) Positionen ermittelt werden, welche jedoch kinematisch durch die Beschleunigungen, die ebenfalls gemessen werden können, äquivalent sind. Weiterhin äquivalent ist eine Messung von Geschwindigkeiten, verursacht durch die Vibrationen.

Bevorzugt weisen primäre Sensorachsen der Vibrationserfassungseinheit Neigungswinkel ungleich null gegenüber der Rotationsachse des Rotationstischs auf. Insbesondere, wenn ein oder mehrere Beschleunigungssensoren verwendet werden, werden diese mit einem entsprechenden Winkel gegenüber der Rotationsachse verbaut, besonders bevorzugt im oder am Basiselement. Weiterhin bevorzugt liegen die primären Sensorachsen auf der Oberfläche eines Konus mit der Rotationsachse als Rotationssymmetrieachse des Konus, d. h. bevorzugt um einen Umfang um die Rotationsachse verteilt.

Der Referenzdrehmesser dient dazu, eine absolute Position und eine Drehrate zwischen dem Rotationstisch und dem Basiselement zu messen. Zur direkten Messung können diverse optische und/oder magnetische Sensorelemente insbesondere entlang eines äußeren Bereichs bezüglich des Durchmessers des Rotationstisches angeordnet werden, um Pulse zu erfassen, die direkt charakteristisch für bestimmte Orientierungen des Rotationstisches sind. Absolute Encoder sind ebenfalls eine Option, solange der Einfluss der Vibrationen in deren Signale soweit wie möglich reduziert werden kann. Auch aus der Messung von Drehraten können Positionen des Rotationstisches hergeleitet werden.

Indem die Aufnahme für den inertialen Sensor gegenüber dem Rotationstisch verkippbar ist, ist es möglich, den inertialen Sensor in mindestens zwei verschiedenen Haupt-Last-Richtungen zu testen, indem der inertiale Sensor insbesondere mit seinem Gehäuse in seiner Orientierung entsprechend gegenüber dem Rotationstisch verdreht wird. Zwischen den Tests mit ihrer jeweiligen Orientierung des inertialen Sensors treten vorteilhaft keine Änderungen von Unsicherheiten in der Orientierung gegenüber dem Rotationstisch auf, das sogenannte "misalignment" bleibt während Orientierungsänderung der Aufnahme zusammen mit dem inertialen Sensor konstant. Dieser Orientierungsfehler, genannt "misalignment", ändert sich somit auch nicht gegenüber der Referenzsensoreinheit, welche ebenfalls an der Aufnahme körperfest angeordnet ist. Eine Orientierungsänderung des inertialen Sensors ist damit immer auch identisch mit einer Orientierungsänderung der Referenzsensoreinheit durch Verkippen der Aufnahme.

Dieser Umstand führt vorteilhaft dazu, den inertialen Sensor und Orientierungsfehler (misalignments) der Aufnahme charakterisieren zu können. Dadurch, dass durch die Vibrationserfassungseinheit die am inertialen Sensor auftretenden Beschleunigungen aus Vibrationen und die genau bekannte Rotation des Rotationstisches und die somit wegen der Rotation auf den inertialen Sensor wirkenden Beschleunigungen für alle Tests genau bekannt sind, sowie dadurch, dass mit der Referenzsensoreinheit direkte Messungen von Drehraten und/oder Beschleunigungen an der Aufnahme zur Verfügung stehen, ist eine Referenz bekannt, d. h. eine Ground Truth an Daten über Einflüsse, die tatsächlich auf den getesteten inertialen Sensor wirken. Diese bekannten Referenzgrößen, zusammen mit dem zeitlich zugeordneten Sensorsignal des inertialen Sensors im Test, erlaubt eine genaue Charakterisierung des inertialen Sensors beispielsweise durch eine Methode der kleinsten Quadrate.

Die Referenzsensoreinheit, angeordnet an der Aufnahme, in/an welche der zu testende inertiale Sensor anordenbar ist, liefert die Information die nötig ist, um die Orientierung der Aufnahme relativ zu den Referenzbeschleunigungen und der Rotationsachse des Rotationstisches zu schätzen, auch wenn die Referenzsensoreinheit unter dem Einfluss der Vibrationen für die Referenzbeschleunigungen und der Rotation des Rotationstisches steht, welcher tendenziell die Information degradiert. Entscheidend ist an den Daten der Referenzsensoreinheit, dass sie zusammen mit dem inertialen Sensor körperfest zur Aufnahme vorgesehen wird, sodass die Referenz der Referenzsensoreinheit relativ zum inertialen Sensor bei einer Orientierungsänderung der Aufnahme unverändert bleibt.

Die Vorrichtung erlaubt es nicht nur, eine ausreichende Anregung zu erzeugen, um das Verhalten eines inertialen Sensors unter gleichzeitiger Vibration und Rotation zu beobachten, sondern auch, um einen solchen Sensor mit hoher Genauigkeit zu charakterisieren. Dies wird insbesondere dadurch erreicht, dass Rotation und Vibration auf den getesteten inertialen Sensor gleichzeitig aufgebracht werden können, um eine vollständige Beobachtung des Verhaltens des inertialen Sensors zu ermöglichen.

Gemäß einer vorteilhaften Ausführungsform weist die Vibrationserfassungseinheit zumindest einen Beschleunigungssensor auf.

Gemäß einer weiteren vorteilhaften Ausführungsform weist die Vibrationserfassungseinheit mehrere Beschleunigungssensoren auf, deren Messrichtungen jeweils einen Winkel zur Rotationsachse aufweisen.

Gemäß einer weiteren vorteilhaften Ausführungsform weist die Vibrationserfassungseinheit eine Vielzahl von Beschleunigungssensoren auf, wobei Messrichtungen der Beschleunigungssensoren jeweils einen Winkel zu einer vorgesehenen Richtung der Referenzbeschleunigungen aufweisen.

Gemäß einer weiteren vorteilhaften Ausführungsform ist die Vibrationserfassungseinheit im oder am Basiselement angeordnet.

Gemäß einer weiteren vorteilhaften Ausführungsform werden für einen Rotationssensor, insbesondere Drehratensensor, als inertialer Sensor die Sensorsignale des inertialen Sensors für mindestens zwei verschiedene Ausrichtungen der Aufnahme relativ zum Rotationstisch ausgelesen, jeweils unter Vibrationen, die von der Vibrationserzeugereinheit und unter der Drehung des Rotationstischs erzeugt werden, und werden verglichen mit Referenzsignalen aus mindestens der Referenzsensoreinheit.

Gemäß einer weiteren vorteilhaften Ausführungsform werden für einen Beschleunigungssensor als inertialer Sensor die Sensorsignale des inertialen Sensors für mindestens zwei verschiedene Ausrichtungen der Aufnahme relativ zur vorgesehenen Richtung der Referenzbeschleunigungen ausgelesen, die durch verschiedene mögliche Kombinationen der Ausrichtung zwischen der Aufnahme im Bezug auf den Rotationstisch, der Winkelposition des Rotationstisches zum Basiselement und die Ausrichtung der Vibrationserzeugereinheit, jeweils unter Vibrationen, die von der Vibrationserzeugereinheit und optional unter Drehung des Rotationstisches erzeugt werden, und mit Referenzsignalen zumindest aus der Referenzsensoreinheit verglichen.

Gemäß einer weiteren vorteilhaften Ausführungsform weist die Vorrichtung weiterhin eine Temperaturregelvorrichtung zum Einstellen einer gewünschten Temperatur am inertialen Sensor auf, wenn dieser in der Aufnahme aufgenommen ist.

Hierzu kann ein Peltier-Element vorgesehen werden, die Aufnahme und/oder der Rotationstisch als Wärmesenke verwendet werden. Weiterhin wird vorteilhaft hierzu ein Temperatursensor vorgesehen, um eine gewünschte Temperatur einzuregeln, sowie um die Temperaturdaten unter Zuordnung zu den Vibrationen und Rotationen für eine Charakterisierung des inertialen Sensors zu verwenden.

Gemäß einer weiteren vorteilhaften Ausführungsform ist die Vibrationserzeugereinheit dazu ausführt, Referenzbeschleunigungen in zumindest zwei Achsen zu erzeugen, besonders bevorzugt entlang und quer zur Rotationsachse.

Ein weiterer Aspekt der Erfindung betrifft ein Verfahren zur Durchführung von Tests für die Charakterisierung und/oder Kalibrierung eines inertialen Sensors, wobei eine Vorrichtung verwendet wird, die ein stationäres Basiselement und einen am Basiselement rotierbar gelagerten Rotationstisch aufweist, wobei der Rotationstisch eine Aufnahme für den inertialen Sensor und für eine Referenzsensoreinheit aufweist, und die Vorrichtung einen mit dem Rotationstisch verbundenen Motor zum Rotieren des Rotationstischs gegenüber dem Basiselement um eine Rotationsachse, einen Referenzdrehmesser zum Bestimmen einer aktuellen Drehposition und Drehrate des Rotationstischs gegenüber dem Basiselement, eine Vibrationserzeugereinheit zum Erzeugen von Referenzbeschleunigungen am Rotationstisch, eine Vibrationserfassungseinheit zum Erfassen von am Rotationstisch tatsächlich vorliegenden Referenzbeschleunigungen oder von sich daraus ergebenden translatorischen Positionen des Rotationstischs, und eine Steuereinheit aufweist, die die Vibrationserzeugereinheit zum Erzeugen von Referenzbeschleunigungen und gleichzeitig den Motor zum Rotieren des Rotationstischs gegenüber den Basiselement ansteuert, und wobei die Aufnahme an dem Rotationstisch verkippbar ist; wobei eine Orientierung des inertialen Sensors zusammen mit einer Orientierung der Referenzsensoreinheit gegenüber der Rotationsachse des Rotationstischs ohne Herausnehmen des inertialen Sensors aus der Aufnahme durch Verkippen der Aufnahme geändert wird, und wobei Sensorsignale des an der Aufnahme angeordneten inertialen Sensors ausgelesen werden und mit Referenzsignalen aus zumindest der Referenzsensoreinheit verglichen werden.

Bevorzugt werden die Referenzsignale aus den Signalen der Referenzsensoreinheit, der Vibrationserfassungseinheit, und den Signalen des Referenzdrehmessers ermittelt. Damit stehen verschiedene Datenquellen für die Referenzsignale zur Verfügung, teils aus einem nicht-drehenden System, teils aus dem drehenden System der Aufnahme.

Gemäß einer weiteren vorteilhaften Ausführungsform wird als inertialer Sensor ein Drehratensensor oder ein Beschleunigungssensor verwendet.

Gemäß einer weiteren vorteilhaften Ausführungsform wird eine Sensorfusion der Signale der Referenzsensoreinheit, der Vibrationserfassungseinheit und Referenzdrehmesser durchgeführt, und das Ergebnis der Sensorfusion zur Ermittlung von Referenzsignalen verwendet, wobei die Referenzsignale mit den Sensorsignalen des inertialen Sensors verglichen werden.

Es stehen genaue absolute Daten über die Position während der Vibration und der Rotation zur Verfügung. Diese Daten, wenn sie mit den Daten der Referenzsensoreinheit fusioniert werden, erhöhen die Genauigkeit der geschätzten Beschleunigungen und Rotationen an der Aufnahme durch die intrinsische höhere Genauigkeit und durch die Tatsache, dass sie keinen Drift einführen. Ein Sensorfusions-Algorithmus, der die verschiedenen Referenzsignale fusioniert, um eine genaue Information über Rotation und Beschleunigung an der Aufnahme zu erhalten, liefert eine noch genauere Referenz zur Charakterisierung des initialen Sensors.

Gemäß einer weiteren vorteilhaften Ausführungsform werden ein Orientierungsfehler sowie ein Bias der Signale der Referenzsensoreinheit und/oder der Vibrationserfassungseinheit und/oder des Referenzdrehmessers, bevorzugt aller drei, oder der Referenzsignale, geschätzt und bevorzugt außerdem kompensiert, wenn die Referenzsignale mit der Sensorfusion erhalten werden, um genauere Referenzsignale zu erzeugen.

Der Orientierungsfehler wird auch "misalignment" genannt. Diese misalignment und ein Sensor-Bias, d. h. eine Abweichung des Sensorsignals vom physisch vorliegenden Wert wird insbesondere durch die geneigte Orientierung von Beschleunigungssensoren der Vibrationserfassungseinheit ermöglicht. Durch die verschiedenen Versuchsbedingungen mittels der Verdrehung der Aufnahme für den inertialen Sensor relativ zur Rotationsachse und die ausreichende dynamische Anregung durch Rotationsprofile und Vibrationsprofile, die durch die Steuereinheit eingesteuert werden, sind hinreichend dafür, um die misalignments und biases der Sensoren, die für die Herleitung der Referenzsignale verwendet werden, herzuleiten. Damit ist die Grundlage dafür geschaffen, die tatsächliche Orientierung der Aufnahme zu berechnen, um daraus wiederum die finalen Schätzungen der Referenzsignale abzuleiten, und um eine genauere Schätzung eines Bias herzuleiten, der möglicherweise durch die Vibrationen am Rotationstisch entsteht.

Vorteile und bevorzugte Weiterbildungen des vorgeschlagenen Verfahrens ergeben sich durch eine analoge und sinngemäße Übertragung der im Zusammenhang mit der vorgeschlagenen Vorrichtung vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist.

Es zeigen:
Fig. 1: Ein Basiselement und einen Rotationstisch einer Vorrichtung zur Durchführung von Tests für die Charakterisierung eines inertialen Sensors gemäß einem Ausführungsbeispiel der Erfindung.
Fig. 2: Einen Rotationstisch mit einer Aufnahme in einer ersten Orientierung gemäß einem Ausführungsbeispiel der Erfindung.
Fig. 3: Den Rotationstisch der Fig. 2 mit der Aufnahme in einer zweiten Orientierung.
Fig. 4: Einen Rotationstisch mit einer Vibrationserzeugereinheit für vertikale Vibrationen mit der Aufnahme in einer ersten Orientierung gemäß einem Ausführungsbeispiel der Erfindung.
Fig. 5: Einen Rotationstisch mit einer Vibrationserzeugereinheit für horizontale Vibrationen mit der Aufnahme in einer ersten Orientierung gemäß einem Ausführungsbeispiel der Erfindung.
Fig. 6: Einen Rotationstisch mit einer Vibrationserzeugereinheit für vertikale Vibrationen mit der Aufnahme in einer zweiten Orientierung gemäß einem Ausführungsbeispiel der Erfindung.
Fig. 7: Einen Rotationstisch mit einer Vibrationserzeugereinheit für horizontale Vibrationen mit der Aufnahme in einer zweiten Orientierung gemäß einem Ausführungsbeispiel der Erfindung.

Die Darstellungen in den Figuren sind schematisch und nicht maßstäblich.

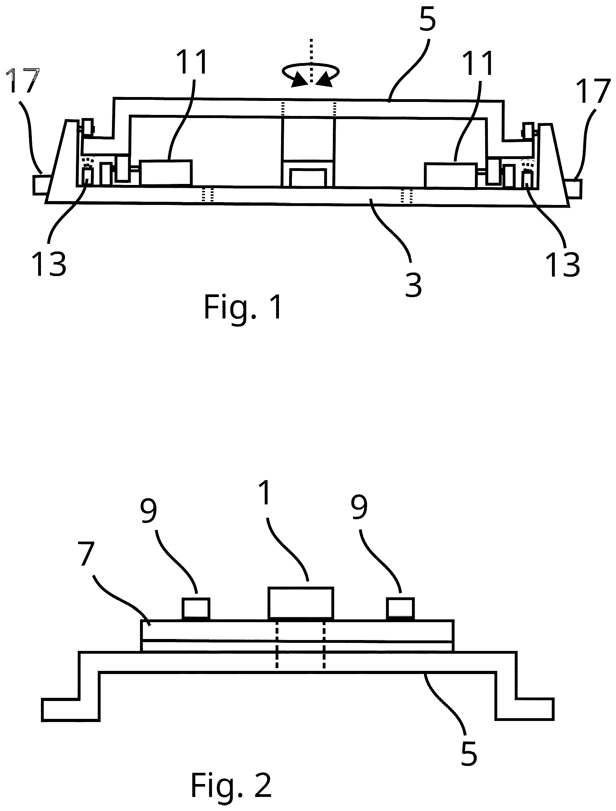

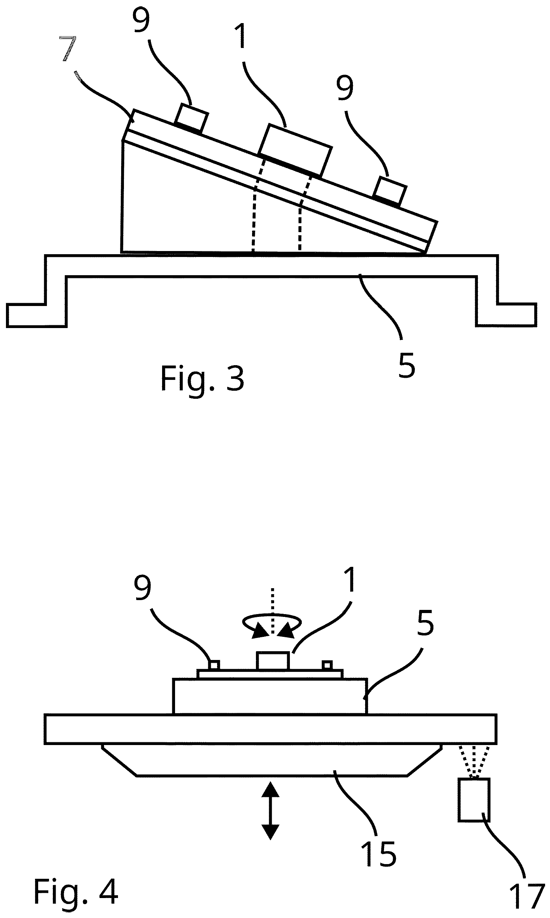

Fig. 1 zeigt einen unteren Teil einer Vorrichtung zur Durchführung von Tests für die Charakterisierung und/oder Kalibrierung eines inertialen Sensors 1, insbesondere eines Drehratensensors. Ein stationäres Basiselement 3 dient zum Aufstellen der Vorrichtung auf einer ebenen Arbeitsoberfläche. Am Basiselement 3 ist ein Rotationstisch 5 gelagert, der mittels Rollenlager, die auf der oberen Mantelseite des Rotationstisches 5 an seinem äußeren Rand abrollen, gegen translatorische Verschiebungen gegenüber dem Basiselement 3 gesichert ist. Zwei elektrische Motoren 11 bringen den Rotationstisch 5 gegenüber dem Basiselement 3 um eine Rotationsachse wie in Fig. 1 skizziert zum Rotieren. Ein linker und rechter Referenzdrehmesser 13 dient ferner zum Bestimmen einer aktuellen Drehposition des Rotationstischs 5 gegenüber dem Basiselement 3. Zwei Beschleunigungssensoren einer Vibrationserfassungseinheit 17, angeordnet am Basiselement 3, dienen zum Erfassen von am Basiselement 3 tatsächlich vorliegenden Referenzbeschleunigungen, die von einer Vibrationserzeugereinheit 15 (siehe Fig. 4 und folgende) erzeugt werden. Mittels einer Steuereinheit wird diese Vibrationserzeugereinheit 15 zum Erzeugen von Referenzbeschleunigungen angesteuert, gleichzeitig von dieser der Motor 11 zum Rotieren des Rotationstischs 5 gegenüber dem Basiselement 3 angesteuert.

Fig. 2 zeigt Details des Rotationstisches 5. Dieser weist eine Aufnahme 7 für den inertialen Sensor 1 und für eine Referenzsensoreinheit 9 mit zwei Beschleunigungssensoren auf. Die Aufnahme 7 ist derart gestaltet, dass darin der inertiale Sensor 1 aufgenommen werden kann und wieder herausgenommen werden kann. Außerdem ist die Aufnahme 7 gegenüber dem Rotationstisch 5 verkippbar, sodass eine Orientierung des inertialen Sensors 1 zusammen mit einer Orientierung der Referenzsensoreinheit 9 gegenüber der Rotationsachse des Rotationstischs 5 veränderbar ist, ohne dass ein Herausnehmen des inertialen Sensors 1 aus der Aufnahme 7 zu seiner Orientierungsänderung nötig ist.

Fig. 3 zeigt die Aufnahme 7 in einem verkippten Zustand gegenüber dem Zustand aus der Fig. 2. Die Orientierungsänderung der Aufnahme 7 gegenüber dem Rotationstisch 5 kann so erfolgen, dass in beiden Orientierungen der Aufnahme 7 wie in Fig. 2 und Fig. 3 gezeigt, der initiale Sensor 1 sequenziell getestet werden kann, ohne für die Orientierungsänderung aus der Aufnahme 7 herausgenommen werden zu müssen.

Fig. 4 zeigt den Rotationstisch 5 mit der Aufnahme 7 in heruntergeklappter Stellung, wobei außerdem die Komponente der Vibrationserzeugereinheit 15 dargestellt ist, die für Vibrationen am Rotationstisch 5 verantwortlich ist, die entlang der Rotationsachse des Rotationstischs 5 gegenüber dem Basiselement 3 gerichtet sind. Es handelt sich hierbei um translatorische Vibrationen. Ein in Richtung der Rotationsachse messender Positionssensor einer Vibrationserfassungseinheit 17 misst hierbei die exakte Auslenkung des Rotationstischs 5 aufgrund der Vibrationen über die Zeit.

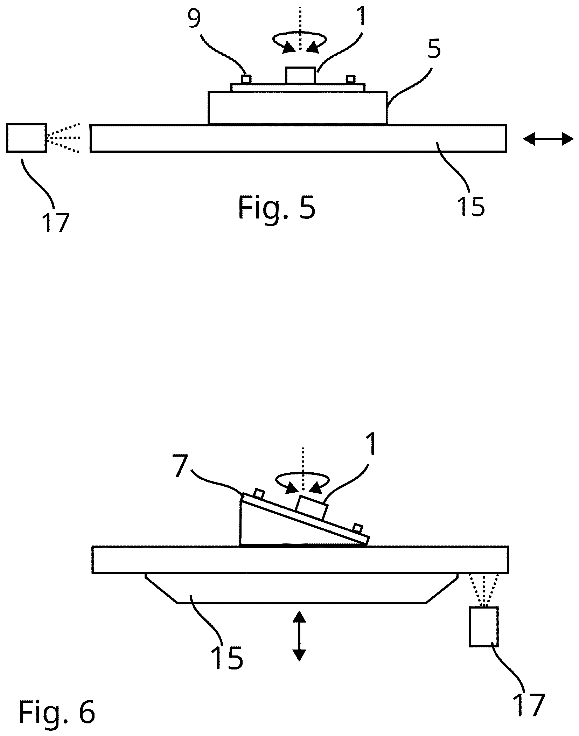

Fig. 5 zeigt den Rotationstisch 5 mit der Aufnahme 7 in einer aufgeklappten Stellung, wobei außerdem die Komponente der Vibrationserzeugereinheit 15 dargestellt ist, die für Vibrationen am Rotationstisch 5 verantwortlich ist, die quer zur Rotationsachse des Rotationstischs 5 gegenüber dem Basiselement 3 gerichtet sind. Es handelt sich hierbei ebenfalls um translatorische Vibrationen. Ein quer zur Rotationsachse messender Positionssensor der Vibrationserfassungseinheit 17 misst hierbei die exakte Auslenkung des Rotationstischs 5 über die Zeit.

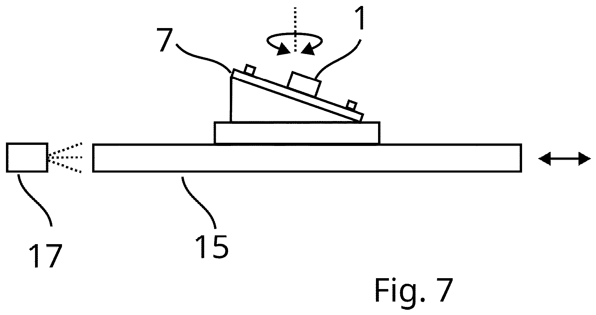

Fig. 6 und Fig. 7 entsprechen den Darstellungen der Fig. 4 und Fig. 5, jedoch ist hierbei jeweils die Aufnahme 7 in einer geänderten Orientierung gegenüber dem Rotationstisch 5 gezeigt.

Obwohl die Erfindung im Detail durch bevorzugte Ausführungsbeispiele näher illustriert und erläutert wurde, ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

### Bezugszeichenliste

- 1: inertialer Sensor im Test
- 3: Basiselement
- 5: Rotationstisch
- 7: Aufnahme
- 9: Referenzsensoreinheit
- 11: Motor
- 13: Referenzdrehmesser
- 15: Vibrationserzeugereinheit
- 17: Vibrationserfassungseinheit

## Patentansprüche

1. Vorrichtung zur Durchführung von Tests für die Charakterisierung und/oder Kalibrierung eines inertialen Sensors (1), aufweisend:
- ein stationäres Basiselement (3) und einen am Basiselement (3) rotierbar gelagerten Rotationstisch (5), wobei der Rotationstisch (5) eine Aufnahme (7) für den inertialen Sensor (1) und für eine Referenzsensoreinheit (9) aufweist;
- einen mit dem Rotationstisch (5) verbundenen Motor (11) zum Rotieren des Rotationstischs (5) gegenüber dem Basiselement (3) um eine Rotationsachse;
- einen Referenzdrehmesser (13) zum Bestimmen einer aktuellen Drehposition und Drehrate des Rotationstischs (5) gegenüber dem Basiselement (3);
- eine Vibrationserzeugereinheit (15) zum Erzeugen von Referenzbeschleunigungen am Rotationstisch (5);
- eine Vibrationserfassungseinheit (17) zum Erfassen von am Rotationstisch (5) tatsächlich vorliegenden Referenzbeschleunigungen und Referenzverschiebungen des Rotationstischs (5);
- eine Steuereinheit, die dazu eingerichtet und ausgeführt ist, die Vibrationserzeugereinheit (15) zum Erzeugen von Referenzbeschleunigungen und gleichzeitig den Motor (11) zum Rotieren des Rotationstischs (5) gegenüber dem Basiselement (3) anzusteuern;
wobei die Aufnahme (7) gegenüber dem Rotationstisch (5) verkippbar ist, sodass eine Orientierung des inertialen Sensors (1) zusammen mit einer Orientierung der Referenzsensoreinheit (9) gegenüber der Rotationsachse des Rotationstischs (5) veränderbar ist, ohne dass ein Herausnehmen des inertialen Sensors (1) aus der Aufnahme (7) zu seiner Orientierungsänderung nötig ist.

2. Vorrichtung nach Anspruch 1,
wobei die Vibrationserfassungseinheit (17) eine Vielzahl von Beschleunigungssensoren aufweist, wobei Messrichtungen der Beschleunigungssensoren jeweils einen Winkel zu einer vorgesehenen Richtung der Referenzbeschleunigungen aufweisen.

3. Vorrichtung nach Anspruch 2,
wobei die Messrichtungen entlang eines Konus ausgerichtet sind.

4. Vorrichtung nach einem der vorhergehenden Ansprüche,
weiterhin aufweisend eine Temperaturregelvorrichtung zum Einstellen einer gewünschten Temperatur am inertialen Sensor (1), wenn dieser in der Aufnahme (7) aufgenommen ist.

5. Verfahren zur Durchführung von Tests für die Charakterisierung und/oder Kalibrierung eines inertialen Sensors (1), wobei eine Vorrichtung verwendet wird, die ein stationäres Basiselement (3) und einen am Basiselement (3) rotierbar gelagerten Rotationstisch (5) aufweist, wobei der Rotationstisch (5) eine Aufnahme (7) für den inertialen Sensor (1) und für eine Referenzsensoreinheit (9) aufweist, und die Vorrichtung einen mit dem Rotationstisch (5) verbundenen Motor (11) zum Rotieren des Rotationstischs (5) gegenüber dem Basiselement (3) um eine Rotationsachse, einen Referenzdrehmesser (13) zum Bestimmen einer aktuellen Drehposition und Drehrate des Rotationstischs (5) gegenüber dem Basiselement (3), eine Vibrationserzeugereinheit (15) zum Erzeugen von Referenzbeschleunigungen am Rotationstisch (5), eine Vibrationserfassungseinheit (17) zum Erfassen von am Rotationstisch (5) tatsächlich vorliegenden Referenzbeschleunigungen und Referenzverschiebungen des Rotationstischs (5), und eine Steuereinheit aufweist, die die Vibrationserzeugereinheit (15) zum Erzeugen von Referenzbeschleunigungen und gleichzeitig den Motor (11) zum Rotieren des Rotationstischs (5) gegenüber den Basiselement (3) ansteuert, und wobei die Aufnahme (7) an dem Rotationstisch (5) verkippbar ist; wobei eine Orientierung des inertialen Sensors (1) zusammen mit einer Orientierung der Referenzsensoreinheit (9) gegenüber der Rotationsachse des Rotationstischs (5) ohne Herausnehmen des inertialen Sensors (1) aus der Aufnahme (7) und ohne Herausnahme der Referenzsensoreinheit (9) durch Verkippen der Aufnahme (7) geändert wird, und wobei Sensorsignale des an der Aufnahme (7) angeordneten inertialen Sensors (1) ausgelesen werden und mit Referenzsignalen aus zumindest der Referenzsensoreinheit (9) verglichen werden.

6. Verfahren nach Anspruch 5,
wobei als inertialer Sensor (1) ein Rotationssensor oder ein Beschleunigungssensor verwendet wird.

7. Verfahren nach Anspruch 6,
wobei für einen Rotationssensor als inertialer Sensor (1) die Sensorsignale des inertialen Sensors (1) für mindestens zwei verschiedene Ausrichtungen der Aufnahme (7) relativ zum Rotationstisch (5) ausgelesen, jeweils unter Vibrationen, die von der Vibrationserzeugereinheit (15) und unter der Drehung des Rotationstischs (5) erzeugt werden, und verglichen werden mit Referenzsignalen aus mindestens der Referenzsensoreinheit (9).

8. Verfahren nach Anspruch 6,
wobei für einen Beschleunigungssensor als inertialer Sensor (1) die Sensorsignale des inertialen Sensors (1) für mindestens zwei verschiedene Ausrichtungen der Aufnahme (7) relativ zur vorgesehenen Richtung der Referenzbeschleunigungen ausgelesen werden, die durch verschiedene mögliche Kombinationen der Ausrichtung zwischen der Aufnahme (7) im Bezug auf den Rotationstisch (5), der Winkelposition des Rotationstisches (5) zum Basiselement (3) und die Ausrichtung der Vibrationserzeugereinheit (15), jeweils unter Vibrationen, die von der Vibrationserzeugereinheit (15) und optional unter Drehung des Rotationstisches (5) erzeugt werden, und mit Referenzsignalen zumindest aus der Referenzsensoreinheit (9) verglichen werden.

9. Verfahren nach einem der Ansprüche 5 bis 8,
wobei eine Sensorfusion der Signale der Referenzsensoreinheit (9), der Vibrationserfassungseinheit (17) und des Referenzdrehmessers (13) durchgeführt wird, und das Ergebnis der Sensorfusion zur Ermittlung von Referenzsignalen verwendet wird, wobei die Referenzsignale mit den Sensorsignalen des inertialen Sensors (1) verglichen werden.

10. Verfahren nach Anspruch 9,
wobei ein Orientierungsfehler sowie ein Bias der Signale der Referenzsensoreinheit (9) und/oder der Vibrationserfassungseinheit (17) und/oder des Referenzdrehmessers (13), oder der Referenzsignale, geschätzt werden.
